# EUROPEAN PATENT APPLICATION

(11) **EP 1 968 146 A1**
(43) Date of publication of application: **10.09.2008**
(21) Application number: 07102734.6
(22) Date of filing: 20.02.2007
(51) Int. Cl.: H01M 8/10, H01M 8/16, H01M 8/04

(54) **Process for generating electric energy from biomass**

(71) Applicant: BIOeCON International Holding N.V., Curaçao (AN)
(72) Inventor: O'Connor, Paul, 3871 KM Hoevelaken (NL); Daamen, Sjoerd, 08017 Barcelona (ES)
(74) Representative: Rasser, Jacobus Cornelis

(57) **Abstract**

A process is disclosed for converting cellulosic biomass to electric energy. Cellulosic biomass is dissolved in a suitable solvent. The solution is used as a feed for a fuel cell.

## Description

### BACKGROUND OF THE INVENTION

### 1. Field of the Invention

The present invention relates to a process for generating electric energy from biomass.

### 2. Description of the Related Art

As the supply of light crude diminishes, alternate materials are being developed as a source of liquid and gaseous fuels. One resource that is abundantly available is biomass, in particular biomass that is generally considered to be a "waste" byproduct of agriculture or forestry.

These waste biomass materials contain cellulosic materials, i.e., cellulose, lignin, and lignocellulose.

It is possible to convert cellulose to water-soluble materials such as furfural, oligo- and monosaccharides, and ethanol. However, the processes used for these conversions tend to be cumbersome and expensive. Moreover, only a fraction of cellulosic materials are converted in this manner.

WO 03/029329 discloses a class of ionic liquids that may be used to dissolve cellulose. The disclosed processes make use of refined forms of cellulosic materials, such as wood pulp. The dissolved cellulose is precipitated from the solution by adding a non-solvent, such as water.

It is an object of the present invention is to provide solutions of cellulosic biomass in a suitable solvent, and using this solution in a fuel cell for generating electricity.

### SUMMARY OF THE INVENTION

The present invention relates to a process for generating electric energy from cellulosic biomass, comprising the steps of:
a) providing a solution of the cellulosic biomass in a suitable solvent;
b) removing undissolved particulate material from the solution of step a);
c) feeding the solution obtained in step b) to a fuel cell.

The cellulosic biomass may be derived from cellulose or lignin or lignocellulose by a process such as (mild) pyrolysis, (mild) hydrothermal treatment, and the like. In this case the cellulosic biomass is water-soluble, and the suitable solvent may be water.

In an alternate embodiment the cellulosic biomass may be cellulose, lignin, or lignocellulose. In this case the suitable solvent may be an ionic liquid or a molten salt.

DESCRIPTION OF ILLUSTRATIVE EMBODIMENTS

The following is a description of certain embodiments of the invention, given by way of example only.

The first step of the process of the present invention involves providing a solution of a cellulosic biomass in a suitable solvent. In a preferred embodiment this process uses agricultural or forestry waste as its starting material. Examples include straw, wood chips, saw dust, bagasse, corn husks, and the like. It will be understood that more refined forms of biomass may also be used.

In a first embodiment, the biomass is (partially) converted to water-soluble cellulose-derived materials. Processes suitable for use herein are disclosed in the co-pending patent applications EP 06113564.6; EP 06113567.9; and 06113545.5; US 60/831,219; US 60/831,242; US 60/837.915; and US 60/850,256, the disclosures of which are incorporated herein by reference.

Generally, these processes produce conversion products in three phases, an oily phase, a water phase, and solids. For the process of the present invention the water phase is separated from the oily phase, and any solid particles are removed by techniques well-known in the art, such as filtering.

The water phase contains dissolved cellulose-derived compounds, referred to herein as water-soluble cellulosic biomass. This water phase with dissolved water-soluble cellulosic biomass may be used as a fuel for a fuel cell. A scale-up model of the miniature fuel cell described in Nicolas Mano, Fei Mao, and Adam Heller J. Am. Chem. Soc.; 2002; 124(44) pp 12962 - 12963 is suitable. The electrodes in this cell are made of carbon coated with redox polymers. An important advantage of this type of fuel cell is that its electrodes, unlike enzyme coated electrodes, are nonspecific to the chemical species that is used as the fuel. The fuel cell has been demonstrated to work with sugar as the fuel, and will accept sugar-like compounds, such as the water cellulose biomass, as a fuel as well. A further advantage of this fuel cell is that it does not require the electrodes to be separated by a membrane. The absence of a membrane lowers the cost of the fuel cell.

Other suitable fuel cells include those using metals from the Pt group or Au as electrode materials.

In a second embodiment the cellulosic biomass is not subjected to a conversion reaction. Accordingly, the cellulosic biomass of this embodiment is not water-soluble. Generally, the cellulosic biomass for use in this embodiment is "waste" biomass from agriculture or forestry, although more refined forms of biomass may be used.

Prior to dissolution in a suitable solvent, the cellulosic biomass is reduced in particle size using a technique such as milling, comminuting, shredding, and the like. It is desirable to make the particles as small as possible, but the energy requirements make it undesirable to reduce the particle size too much. In general particle sizes below several centimeters are suitable, although smaller particle sizes, e.g. < 3 mm, are preferred, particle sizes < 1 mm being most preferred.

Suitable solvents include supercritical fluids, molten salts, and ionic liquids. An example of a supercritical fluid is supercritical CO₂.

The term "molten salt" as used herein means molten organic and inorganic salts having a melting point of less than 300 °C, preferably less than 200 °C. Preferred for use herein are the inorganic salts. Suitable salts include the lithium, magnesium, sodium, copper iron (III), potassium and zinc chlorates, chlorides, bromides, iodides, nitrates, sulfides, acetates, and isocyanates. The term includes the hydroxides of these cations. The cations may be complexed with ammonium, for example cupric ammonium hydroxide. A preferred example is zinc chloride.

These molten salts should be water-free, in the sense that they are substantially free of unbound water. However, many of these salts contain water of hydration, which is not considered "free water" as this term is used herein.

The term "molten salt" as used herein further encompasses liquid acids, such as (anhydrous) sulfuric acid, hydrochloric acid, phosphoric acid, formic acid, and acetic acid. Specifically preferred are the so-called superacids, i.e., acids having an acidity greater than 100% sulfuric acid. Examples include trifluoromethanesulfonic acid (CF₃SO₃H, "triflic acid"), and fluorosulfonic acid (FSO₃H). Superacids should be used in their anhydrous form.

The term "ionic liquid" as used herein means an organic salt in its molten form, said salt having a melting point of less than 150°C, preferably less than 100 °C. Examples include molten N-ethylpyridinium chloride, and the class of imidazolinium halogenides, such as 1-butyl-3-methylimidazolinium chloride (BMIMCI) and 1-allyl-3-methylimidazolinium chloride (AMIMCI). Other suitable ionic liquids are disclosed in WO 03/0239329, the disclosures of which are incorporated herein by reference. It will be understood that the ionic liquids should be substantially water free for use as a solvent of cellulosic biomass, as the presence of even small amount of water significantly reduce the solubility of cellulosic biomass in these solvents.

In a fuel cell, the dissolved cellulosic materials should be selectively oxidized, while the solvent remains unchanged. Therefore, the molten salt or the ionic liquid must have an oxidation potential that is lower than that of the cellulosic materials.

For dissolving the cellulosic biomass in a molten salt or an ionic liquid it may be necessary to apply heat. Microwave energy is a suitable form of heat energy for this purpose.

Undissolved residue may be removed by any means known in the art, including membrane filtration and high pressure filtration.

The solution of cellulosic material is suitable as a fuel for a fuel cell. The above-described fuel cell is suitable. Other fuel cell designs may also be suitable, but care should be taken to make sure that the electrolyte materials are compatible with the solvent.

In a third embodiment, the cellulosic biomass is partially converted to water-soluble cellulosic biomass, which isseparated from the undissolved residue. This residue is dried, and then dissolved in a suitable solvent (supercritical fluid, molten salt, or ionic liquid). The first (aqueous) solution is used as fuel for a first fuel cell; the second solution is used for a second fuel cell.

Thus, the invention has been described by reference to certain embodiments discussed above. It will be recognized that these embodiments are susceptible to various modifications and alternative forms well known to those of skill in the art.

## Claims

1. A process for generating electric energy from cellulosic biomass, comprising the steps of:
a) providing a solution of the cellulosic biomass in a suitable solvent;
b) removing undissolved particulate material from the solution of step a);
c) feeding the solution obtained in step b) to a fuel cell.

2. The process of claim 1 wherein the suitable solvent is selected from the group consisting of molten salts; ionic liquids; and supercritical liquids.

3. The process of claim 2 wherein the suitable solvent is a molten salt selected from the group consisting of the lithium, magnesium, sodium, copper iron (III), potassium and zinc chlorates, chlorides, bromides, iodides, nitrates, sulfides, acetates, hydroxides, and isocyanates, and mixtures thereof.

4. The process of claim 2 wherein the suitable solvent is an ionic liquid selected from N-ethylpyridinium chloride and the class of imidazolinium halogenides.

5. The process of claim 2 wherein the suitable solvent is a supercritical liquid is supercritical CO₂.

6. The process of claim 1 wherein step a) comprises the steps of:
(i) incorporating into a supply of biomass particulate inorganic material having catalytic properties, to form a sensitized biomass material;
(ii) at least partially converting the sensitized biomass material to water-soluble hydrocarbon material;
(iii) providing an aqueous solution of the water-soluble hydrocarbon material.

7. The process of claim 1 wherein step a) comprises the steps of:
(i) incorporating into a supply of biomass particulate inorganic material having catalytic properties, to form a sensitized biomass material;
(ii) at least partially converting the sensitized biomass material to a hydrocarbon material soluble in non-aqueous media: molten salts, ionic liquids and/or concentrated acids.
(iii) providing a solution of the hydrocarbon material.
